# EUROPÄISCHE PATENTSCHRIFT

(11) **EP 0 617 039 B1**
(45) Veröffentlichungstag und Bekanntmachung des Hinweises auf die Patenterteilung: **01.09.1999**
(21) Anmeldenummer: 94103779.8
(22) Anmeldetag: 11.03.1994
(51) Int. Cl.: C07F 7/16

(54) **Verfahren zur Herstellung von Organochlorsilanen**
Process for the preparation of organochlorosilanes
Procédé de préparation d'organochlorosilanes

(30) Priorität: 24.03.1993 DE 4309556; 16.12.1993 DE 4342910
(43) Veröffentlichungstag der Anmeldung: 28.09.1994
(73) Patentinhaber: GE Bayer Silicones GmbH & Co. KG, 40699 Erkrath (DE)
(72) Erfinder: Degen, Bruno, Dr., D-53804 Much (DE); Licht, Elke, Dr., D-51381 Leverkusen (DE); Schulze, Manfred, Dr., D-42789 Leichlingen (DE); Wagner, Gebhard, Dr., D-51519 Odenthal (DE); Minuth, Klaus- Peter, Dr., D-40489 Düsseldorf (DE)
(74) Vertreter: Leifert, Elmar, Dr.

(56) Entgegenhaltungen:
- EP-A- 0 372 341
- DE-C- 950 124

## Beschreibung

Die vorliegende Erfindung betrifft ein Verfahren zur Herstellung von Organochlorsilanen durch Umsetzung von schnell abgekühltem Silicium mit einem Alkyl- bzw. Arylchlorid in Gegenwart eines Kupferkatalysators und Promotorsubstanzen. Insbesondere betrifft die Erfindung ein Verfahren zur Herstellung von Methylchlorsilanen.

Das grundlegende Verfahren zum Herstellen von Methylchlorsilanen ist die direkte Umsetzung von feinteiligem, gemahlenem Silicium mit Methylchlorid in Gegenwart von metallischem Kupfer oder seltener Silber als Katalysator. Die Umsetzung ist dem Fachmann als "Rochow-Synthese" bekannt und in der US-PS 2 380 995 beschrieben.

Nach diesem Verfahren erhält man vorwiegend eine Mischung von folgenden Silanen (Me = CH₃): Me₂SiCl₂, Me₄Si, Me₃SiCl, MeSiCl₃, SiCl₄, HSiCl₃, MeHSiCl₂ und Me₂HSiCl. Neben den genannten monomeren Methylchlorsilanen entstehen in geringeren Mengen auch noch höhersiedende Verbindungen wie z.B. Methylchlordisilane, Methylchlortrisilane, Disiloxane und Silmethylene.

Technische Verwendung finden meistens die monomeren Verbindungen und davon insbesondere das Dimethyldichlorsilan. Dieses bevorzugte Reaktionsprodukt wird daher mit möglichst hoher Selektivität angestrebt. Ein Maß hierfür ist u.a. das Verhältnis von MeSiCl₃/Me₂SiCl₂ (das sogenannte Tri-/Di-Verhältnis), dessen Wert möglichst klein sein sollte.

Großtechnisch besonders interessant ist die Herstellung von Methylchlorsilanen durch Reaktion von Methylchlorid mit Silicium in einem Fließbettreaktor, wobei im Überschuß eingesetztes Methylchlorid sowohl Reaktionspartner als auch Fluidisierungsmedium ist.

Seit den grundlegenden Untersuchungen vor ca. 40 Jahren hat es bis heute eine Vielzahl von Veröffentlichungen gegeben, in denen Verfahren zur Durchführung der Reaktion, zur Verbesserung der Selektivität, zur Herstellung von geeigneten Kontaktmassen und Katalysator/Promotorsystemen beschrieben sind. Einen ersten zusammenfassenden Überblick findet man z.B. in "Organohalosilanes: Precursors to Silicones", Voorhoeve, Elsevier Publishing Company Amsterdam, New York, London, 1967.

Jüngste Arbeiten konzentrieren sich hauptsächlich auf den gezielten Einsatz von Spurenelementen, sogenannten Promotoren im Katalysatorsystem.

Beispielhaft seien hier genannt: DE-A 3 425 424, EP-A 138 678, EP-A 138 679, DE-A 3 501 085, EP-A 191 502, EP-A 194 214, EP-A 195 728, EP-A 223 447.

Vergleichsweise wenige Veröffentlichungen beziehen sich auf das Silicium und wenn, dann sind Reinheitsanforderung bzw. physikalische Kenngrößen wie die Korngrößenverteilung Gegenstand der Arbeiten.

Zum Beispiel beschreibt die US-A 3 133 109, daß Teilchengrößen von 20 bis 200 µm für einen optimalen Betrieb eines Fließbettreaktors geeignet sind. In US-A 4 500 724 wird Silicium Kleiner 700 µm als geeignet angesehen, wobei die mittlere Korngröße 20 bis 300 µm und bevorzugt 100 bis 150 µm betragen soll. Die obengenannten Grenzen gelten allgemein als Stand der Technik und Fachleute wissen, daß das jeweilige Optimum in engem Zusammenhang mit dem jeweils benutzten Reaktorsystem zu sehen ist.

Gemäß US-A 4 895 969, EP-A 372 918 und EP-A 372 341 wird vorgeschlagen, verdüstes Silicium für die Organochlorsilansynthese einzusetzen. Dabei wurde besonders auf die günstige Beeinflussung der Reaktionsgeschwindigkeit der Organochlorsilansynthese durch ein rasch erstarrtes Silicium hingewiesen.

Im Rahmen der Untersuchungen, die der vorliegenden Erfindung zugrunde liegen, wurde gefunden, daß die beim schnellen Abkühlen ("Abschrecken") von Silicium erzeugten thermischen Spannungen geeignet sind, eine für die Rochowsynthese günstige Defektstruktur zu erzeugen. Die thermischen Spannungen sind um so größer, je schneller die Abkühlung erfolgt und je größer die räumlichen Abmessungen des Siliciums sind. Durch zu große räumliche Abmessungen wird aber eine schnelle Abkühlung behindert.

Gegenstand der vorliegenden Erfindung ist nun ein Verfahren zur Herstellung von Organochlorsilanen durch direkte Umsetzung von metallischem Silicium mit Organylchloriden, das dadurch gekennzeichnet ist, daß ein metallisches Silicium eingesetzt wird, welches vor der Umsetzung auf Abmessungen von mindestens 5 mm in der geringsten Ausdehnung und 15 mm in der größten Ausdehnung zerteilt, auf mindestens 700°C aufgeheizt, von einer Temperatur von mindestens 700°C auf höchstens 120°C durch Einbringen in flüssigen Stickstoft, Wasser oder Methylchlorid innerhalb von maximal 2 s abgekühlt und anschließend gemahlen wird.

Vorzugsweise wird von einer Temperatur oberhalb 900°C abgeschreckt. Das Abschrecken kann durch Eintauchen des auf hoher Temperatur befindlichen Siliciums in eine auf niedriger Temperatur befindliche, vorzugsweise bewegte, Flüssigkeit erfolgen. Geeignet sind flüssiger Stickstoff oder Wasser, gegebenenfalls auch andere Flüssigkeiten wie Methylchlorid.

Bevorzugt wird Wasser, da der apparative Aufwand gering ist und die hohe spezifische Wärme und Verdampfungsenthalpie des Wassers eine effektive Abkühlung gewährleisten.

Zur Vermeidung der Ausbildung einer SiO₂-Schicht auf dem Silicium und zur Erhöhung der Wärmeleitfähigkeit des Wassers, kann das Wasser durch Zusätze wie Laugen oder alkalisch wirkende oder reduzierend wirkende Zusätze wie z.B. Pufferlösungen aus Carbonaten, Boraten, Phosphaten, organischen Säuren bzw. Salzen organischer Säuren, Aminen, Alkoholen oder Hydrazin und seinen Derivaten und/oder anorganischen salzartigen Zusätzen wie Chloriden, Sulfaten, Nitraten, etc., aber auch durch oberflächenaktive Zusätze wie z.B. Fluortenside, Alkylbenzolsulfonat oder Alkylsulfonat (wie z.B. Mersolat® Bayer AG) speziell aufbereitet werden.

Das Silicium weist vorzugsweise eine chemische Zusammensetzung von (in Gew.-%) 0,05 bis 1 % Fe; 0,01 bis 1 % Al; 0,0001 bis 1 % Ca; 0 bis 8 % Cu; 0 bis 1 % Zn; 0 bis 1 % Sn; 0 bis 0,5 % B; 0 bis 0,5 % P; 0 bis 0,5 % Na; 0 bis 0,5 % Li; 0 bis 0,5 % K; 0 bis 0,5 % Mg; 0 bis 0,5 % Sr; 0 bis 0,5 % Ba; 0 bis 0,5 % Be auf und der Rest ist Silicium (bzw. gegebenenfalls weitere Verunreinigungen in Kleinen Mengen).

Besonders bevorzugt weist das Silicium Gehalte von 0,05 bis 0,38 % Al; 0,001 bis 0,20 % Ca und 0,15 bis 0,55 % Fe, ganz besonders bevorzugt 0,25 bis 0,55 % Fe, auf.

Im Anschluß an das Abschrecken wird das Silicium auf Teilchengrößen unter 1 200 µm, vorzugsweise unter 1 000 µm, in an sich bekannter Weise vermahlen. Im Anschluß an die Vermahlung kann das Silicium in an sich bekannter Weise durch Zusatz von Katalysator- und Promotorsubstanzen zu Organochlorsilanen umgesetzt werden, soweit diese Katalysator- und Promotorsubstanzen nicht bereits im Silicium der Legierungsbestandteile vorhanden sind.

Als Katalysator werden Kupfer und/oder Verbindungen des Kupfers eingesetzt.

Als Promotorelemente sind Zink, Zinn, Antimon, Arsen, Gallium, Indium, Phosphor, Lanthan und/oder Cäsium und/oder deren Verbindungen geeignet. Bevorzugt werden Kombinationen von 2 bis 4 Promotorsubstanzen eingesetzt.

Die Umsetzung in technischem Maßstab erfolgt bevorzugt im Fließbettreaktor bei Temperaturen von 250 bis 350°C, besonders bevorzugt 280 bis 330°C. Zur Erhöhung der Raum/Zeit-Ausbeute kann der Gas/Feststoff-Kontakt bei erhöhtem Druck bis 10 bar durchgeführt werden.

Bevorzugtes Organylchlorid ist Methylchlorid. Soll die Umsetzung mit anderen Alkyl- oder Arylchloriden erfolgen, sind die dem Fachmann geläufigen Abweichungen hinsichtlich der optimalen Reaktionstemperatur und Promotorsubstanzen zu berücksichtigen.

Im folgenden wird die Erfindung anhand von Beispielen näher erklärt.

Dabei werden die Charakterisierungen des Siliciums bezüglich Rochow-Synthese jeweils in der folgenden Versuchsanordnung durchgeführt:

In einem Rührbettreaktor aus Glas, innerer Durchmesser = 30 mm, der mit einem Spiralrührer ausgestattet ist, wurden alle folgenden Experimente durchgeführt. Dabei wurde immer die gleiche Menge Silicium der gleichen Kornverteilung von 71 bis 160 µm eingesetzt. Methylchlorid wurde unter einem Druck von 2 bar von unten über eine Glasfritte durch die Kontaktmasse geleitet. Die Methylchloridmenge wurde konstant gehalten und betrug in allen Fallen ca. 1,5 l/h bei 2 bar. Nach dem Aufheizen und Anspringen der Reaktion wurde eine stationäre Versuchsphase bei 300°C eingestellt und unter so festgelegten Bedingungen die Menge pro Zeiteinheit an gebildeter Rohsilanmischung bestimmt. Die angegebenen Werte sind immer Mittelwerte aus vier Einzelbestimmungen unter konstant gehaltenen Randbedingungen von 2 bar, 1,5 l/h Methylchlorid und 300°C.
Die Kontaktmasse bestand aus jeweils 40 g Silicium, 3,2 g Kupferkatalysator und 0,05 g ZnO und wurde vor dem Einsatz homogenisiert. In allen Fallen wurde der gleiche Katalysator verwendet.

### Beispiele

### Beispiel 1 (Vergleich)

Es wird ein Silicium, enthaltend 0,26 % Fe, 0,18 % Al, 0,039 % Ca und 0,020 % Ti eingesetzt.

Das Silicium wird unter Stickstoff-Atmosphäre aufgeschmolzen und in Barren von 5 cm x 5 cm x 20 cm gegossen. Nach 18 Stunden wurde das Silicium der Form entnommen, in Stücke gebrochen und vermahlen. Nach Sieben wurde das Silicium mit einer Kornverteilung von 71 bis 160 µm eingesetzt.

Die Rochow-Synthese ergab folgendes Ergebnis:

| | |
|---|---|
| Produktionsrate gesamt | 5,2 g/h |
| (CH₃)HSiCl₂ | 2,0 Gew. % |
| (CH₃)₃SiCl | 2,2 Gew. % |
| CH₃SiCl₃ ("Tri") | 4,9 Gew. % |
| (CH₃)₂SiCl₂ ("Di") | 90,4 Gew. % |
| % Tri/% Di | 0,054 |
| Polysilane | 4,4 Gew. % |

### Beispiel 2

Das gemäß Beispiel 1 im Barren erstarrte Silicium wurde auf mittlere Korngrößen von 8 mm Durchmesser gebrochen, unter Stickstoff-Atmosphäre auf 1 050°C aufgeheizt, aus 1 m Höhe in mit einem Rührer bewegtes Eiswasser geschüttet und anschließend vermählen. Nach Sieben wurde das Silicium mit einer Kornverteilung von 71 bis 160 µm eingesetzt.

Die Rochow-Synthese ergab folgendes Ergebnis:

| | |
|---|---|
| Produktionsrate gesamt | 6,6 g/h |
| (CH₃)HSiCl₂ | 1,6 Gew. % |
| (CH₃)₃SiCl | 2,1 Gew. % |
| CH₃SiCl₃ ("Tri") | 4,1 Gew. % |
| (CH₃)₂SiCl₂ ("Di") | 91,8 Gew. % |
| % Tri / % Di | 0,045 |
| Polysilane | 4,0 Gew. % |

## Patentansprüche

1. Verfahren zur Herstellung von Organochlorsilanen durch direkte Umsetzung von metallischem Silicium mit Organylchloriden, dadurch gekennzeichnet, daß ein metallisches Silicium eingesetzt wird, welches vor der Umsetzung auf Abmessungen von mindestens 5 mm in der geringsten Ausdehnung und 15 mm in der größten Ausdehnung zerteilt, auf mindestens 700°C aufgeheizt, von einer Temperatur von mindestens 700°C innerhalb von maximal 2 Sekunden auf höchstens 120°C durch Einbringen in flüssigen Stickstoff, Wasser oder Methylchlorid abgekühlt und anschließend gemahlen wird.

2. Verfahren nach Anspruch 1, dadurch gekennzeichnet, daß von einer Temperatur von mindestens 900°C abgekühlt wird.

## Claims

1. A process for the preparation of organochlorosilanes by the direct reaction of metallic silicon with organyl chlorides, characterized in that a metallic silicon is used which prior to the reaction is reduced down to sizes of at least 5 mm in the smallest dimension and 15 mm in the largest dimension, heated to at least 700°C, cooled from a temperature of at least 700°C to at most 120°C within a maximum of 2 seconds by introduction into liquid nitrogen, water or methyl chloride, and subsequently ground.

2. A process according to claim 1, characterized in that cooling is performed from a temperature of at least 900°C.

## Revendications

1. Procédé de préparation d'organochlorosilanes par réaction directe de silicium métallique avec des chlorures d'organyle, caractérisé en ce que l'on utilise un silicium métallique qui, avant la réaction, est fractionné à des dimensions d'au moins 5 mm dans la plus petite étendue et 15 mm dans la plus grande étendue, chauffé à au moins 700°C, refroidi d'une température d'au moins 700°C en 2 s au maximum à au plus 120°C par introduction dans l'azote liquide, l'eau ou le chlorure de méthyle puis broyé.

2. Procédé selon la revendication 1, caractérisé en ce que l'on refroidit depuis une température d'au moins 900°C.
